Europäisches Patentamt

European Patent Office

Office européen des brevets

(19)

(11) Publication number: **0 052 003**
**B1**

(12) **EUROPEAN PATENT SPECIFICATION**

(45) Date of publication of patent specification: **20.02.85**

(51) Int. Cl.⁴: **B 23 K 9/02**

(21) Application number: **81305309.7**

(22) Date of filing: **09.11.81**

(54) **Method and apparatus for butt welding.**

(30) Priority: **07.11.80 AU 6376/80**

(43) Date of publication of application:
**19.05.82 Bulletin 82/20**

(45) Publication of the grant of the patent:
**20.02.85 Bulletin 85/08**

(84) Designated Contracting States:
**AT BE CH DE FR GB IT LI LU NL SE**

(56) References cited:
**DE-C- 839 399**
**DE-C- 846 589**
**US-A-1 806 954**
**US-A-3 227 349**

(73) Proprietor: **Hume, Kenneth Michael**
**8, Lister Street**
**East Kew Victoria (AU)**

(72) Inventor: **Hume, Kenneth Michael**
**8, Lister Street**
**East Kew Victoria (AU)**

(74) Representative: **Hind, Raymond Stenton et al**
**c/o MATHISEN, MACARA & Co. European**
**Patent Attorneys Lyon House Lyon Road**
**Harrow Middlesex HA1 2ET (GB)**

Courier Press, Leamington Spa, England.

## Description

The present invention relates to a method of continuous butt welding in which weld metal and flux material are deposited between two spaced metal surfaces to be welded by said weld metal.

The invention also relates to apparatus for carrying out such a welding method.

US—A—3 277 349 shows a welding apparatus for welding a circumferential seam of a tank. Flux is fed from a remote supply on an endless belt and held closely underneath the welding zone. In DE—C—938 399 an apparatus is shown for welding a seam in which the plates to be welded define a V-shaped groove with a belt held underneath the seam. A similar apparatus is also shown in US—A—2 294 439 in which flux is supplied both by means of the underlying belt and adjacent the welding electrode. In this way flux is supplied to both sides of the seam. However, it is necessary to provide separate sources of flux.

The method of the present invention is characterised in that the method comprises the steps of depositing said flux material within and through said gap, supporting and carrying said flux material deposited through said gap on a conveyor into the region of the welding operation such that the flux material is maintained against the remote side of said metal surfaces in the region of the welding operation.

This method enables the degree of penetration and remote side weld profile to be readily controlled with simple equipment.

The invention also provides apparatus for carrying out the method defined above, characterised in that the apparatus comprises supply means for supplying from above flux material to and through the gap between two spaced metal surfaces to be welded, and a conveyor having support means for a mobile endless conveyor shaped to support said deposited flux material, said conveyor being adapted to compact said flux material to form a solid flux bed adjacent said metal surfaces in the region of the welding operation, said supply means also supplying flux material into said gap during a welding operation.

Means for maintaining the weld gap and proper alignment of edges may be as described in AU—A—41351/78 or other suitable means.

An embodiment of the invention will now be described, by way of example only, with reference to the accompanying drawings in which:

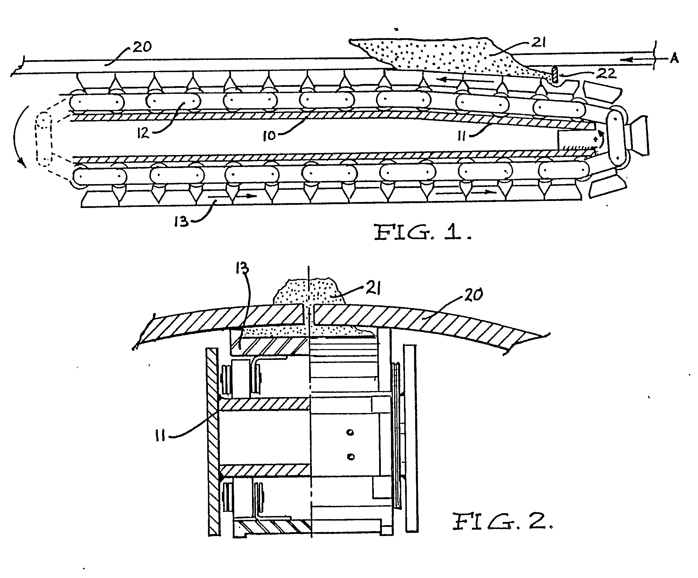

Figure 1 is a side elevational view of the assembly; and Figure 2 is a cross sectional view.

The drawings show only the parts relevant to the application and compacting of the flux, the welding apparatus and associated equipment have been omitted for reasons of clarity. Suffice to say that the welding equipment as described in our earlier specification with AU—A—41351/78 is easily adaptable for use with the present invention.

The apparatus will be described with reference to the joining of a pipe seam, however, it will be appreciated the apparatus and method are applicable to any butt welding of metal parts which are either flat or curved.

The device includes a support 10 having an inclined surface portion 11 and the remainder of its length being level. The support has mounted thereon an endless chain conveyor 12. The chain conveyor includes shoes 13 preferably of copper but the shoes may be of asbestos or other heat resistant material or heat conductive material. The support 11 is pivotally mounted at or near its centre by a bracket (not shown) which is secured to the base of the welding machine to provide a rigid support.

The endless chain acts as a movable support for an incoming pipe 20 to be welded in the welding section by a submerged arc welding apparatus (not shown).

The flux 21 is deposited as a powder within the gap between the spaced metal surfaces of the pipe 20. The weld metal is also deposited within the gap. The flux 21 is allowed to drop through the gap onto the inclined surface of the conveyor supported on the inclined support portion 11 and is held in position by stopper 22. As the pipe 20 moves in direction of travel (arrow A) the flux is compressed and compacted between the plate and the shoes 13 as best shown in Figure 2. As the plate continues its travel the distance between the plate and support 10 is constant whereupon welding takes place and the compressed flux bed forms an excellent bed for the molten weld material resulting in a smooth deep-seat weld join. The flux 21 is supplied to the inclined surface to ensure an adequate supply during a welding operation. Surplus flux remains on said conveyor belt until the belt declines over the head end and returns underneath the conveyor frame.

The conveyor 12 is driven by virtue of the frictional contact between the conveyor 12, flux 21 and the moving pipe 20 to be welded.

The apparatus can be used in a method of fluxless welding in which the shoes 13 are of slightly modified shape to lie flush with the inside surface of the plate but having a small longitudinal recess (not shown) along the line of the weld. The shoe 13 may be cooled or be of ceramic material to avoid the effects of overheating.

The belt could be made of heat resistant material such as asbestos instead of having the construction shown.

## Claims

1. A method of continuous butt welding in which weld metal and flux material (21) are deposited within a gap between two spaced metal surfaces (20) to be welded by said weld metal, characterised in that the method comprises the steps of depositing said flux material (21) within and through said gap, supporting and carrying said flux material (21) deposited through said gap on a conveyor (12) into the region of the welding operation such that the flux material (21) is maintained against the remote side of said metal surfaces (20) in the region of the welding operation.

2. A method of continuous butt welding as claimed in claim 1, characterised in that said conveyor (12) is endless and is driven by virtue of the frictional contact between said conveyor (12), flux material (21) and the metal surfaces (20) which are moved.

3. A method as claimed in claim 1 or claim 2, characterised in that said conveyor (12) is inclined upwardly toward the metal surfaces (20) for a portion of its length such that whilst the conveyor is travelling along the inclined portion the flux material (21) is progressively compacted between said conveyor (12) and said metal surfaces (20), said welding step being carried out in said gap over a section of the conveyor after said flux material compaction.

4. Apparatus for use in a continuous butt welding method as claimed in any one of the preceding claims, characterised in that the apparatus comprises supply means for supplying from above flux material (21) to and through the gap between two spaced metal surfaces (20) to be welded, and a conveyor (12) having support means (10, 11) for a mobile endless conveyor (13) shaped to support said deposited flux material (21), said conveyor (12) being adapted to compact said flux material (21) to form a solid flux bed adjacent said metal surfaces (20) in the region of the welding operation, said supply means also supplying flux material (21) into said gap during a welding operation.

## Revendications

1. Procédé de soudage bout à bout continu, dans lequel un métal de soudure et un fondant (21) sont déposés dans l'intervalle existant entre deux surfaces métalliques espacées (20) à souder par le métal de soudure, caractérisé en ce qu'il comprend les opérations de dépôt de ce fondant (21) dans et à travers l'intervalle susdit, de support et de transport de ce fondant (21) déposé à travers cet intervalle, sur un transporteur (12) dans la zone de l'opération de soudage, de telle sorte que le fondant (21) soit maintenu contre le côté opposé des surfaces métalliques (20) dans cette zone de l'opération de soudage.

2. Procédé de soudage bout à bout continu suivant la revendication 1, caractérisé en ce que le transporteur (12) est de type sans fin et est entraîné grâce au contact de frottement entre ce transporteur (12), le fondant (21) et les surfaces métalliques (20) qui se déplacent.

3. Procédé suivant la revendication 1 ou la revendication 2, caractérisé en ce que le transporteur (12) est incliné vers le haut en direction des surfaces métalliques (20) sur une partie de sa longueur de telle sorte que, tandis que ce transporteur se déplace suivant sa partie inclinée, le fondant (21) est progressivement rendu compact entre ce transporteur (12) et les surfaces métalliques (20), l'opération de soudage étant réalisée dans cet intervalle sur une section du transporteur après l'opération rendant le fondant compact.

4. Appareil utilisable dans un procédé de soudage bout à bout continu suivant l'une quelconque des revendications précédentes, caractérisé en ce qu'il comprend un dispositif d'alimentation pour fournir, depuis le dessus, un fondant (21) à et à travers l'intervalle existant entre deux surfaces métalliques espacées (20) à souder, et un transporteur (12) comportant des éléments de support (10, 11) pour un transporteur sans fin mobile (13) conformé pour supporter le fondant déposé (21), ce transporteur (12) étant destiné à rendre le fondant (21) compact pour former un lit de fondant solide au voisinage des surfaces métalliques (20) dans la zone de l'opération de soudage, le dispositif d'alimentation fournissant également du fondant (21) dans l'intervalle susdit durant une opération de soudage.

## Patentansprüche

1. Verfahren zum kontinuierlichen Stumpfschweissen, worin Schweisse und Flussmittel (21) in eine Fuge zwischen zwei in Abstand zueinander befindlichen, durch die Schweisse zu verschweissenden Metallflächen (20) eingebracht werden, dadurch gekennzeichnet, dass das Verfahren aus folgenden Schritten besteht: Einbringen des Flussmittels (21) in und durch die Fuge, Auflagern des durch die Fuge eingebrachten Flussmittels (21) auf einem Förderer und Förderung zum Bereich des Schweissvorgangs in einer solchen Weise, dass das Flussmittel (21) in diesem Bereich mit der abgelegenen Seite der Metallflächen (20) in Berührung gehalten wird.

2. Verfahren zum kontinuierlichen Stumpfschweissen nach Anspruch 1, dadurch gekennzeichnet, dass der Förderer (12) endlos ist und durch den Reibungskontakt zwischen dem Förderer (12), dem Flussmittel (21) und den bewegenden Metallflächen (20) getrieben wird.

3. Verfahren nach Anspruch 1 oder Anspruch 2, dadurch gekennzeichnet, dass der Förderer (12) über einen Teil seiner Länge in Richtung der Metallflächen (20) derart aufwärts geneigt ist, dass das Flussmittel während der Bewegung des Förderers über den geneigten Fläch-enteil mehr und mehr zwischen dem Förderer (12) und den Metallflächen (20) zusammengepresst wird, wobei der Schweissvorgang in der Fuge auf einem der Zusammenpressung des Flussmittels folgenden Teil des Förderers stattfindet.

4. Vorrichtung zur Anwendung in einem kontinuierlichen Stumpfschweissverfahren nach irgendeinem der vorhergehenden Ansprüche, dadurch gekennzeichnet, dass die Vorrichtung Zufuhrmittel aufweist für die Zuleitung des Flussmittels (21) von oben in und durch die Fuge zwischen zwei in Abstand zueinander befindlichen, zu verschweissenden Metallflächen (20), und einen Förderer (12) mit einer Auflage (10, 11) für ein bewegliches endloses Förderband (13) zum Auflagern des aufgetragenen Flussmittels (21), welcher Förderer (12) dazu geeignet ist, das Flussmittel (21) zusammenzupressen, um in dem Bereich des Schweissvorgangs neben diesen Metallflächen (20) ein festes Flussmittelbett zu bilden, wobei die Zufuhrmittel auch während des Schweissvorgangs Flussmittel in die Fuge einleiten.

FIG. 1.

FIG. 2.